(19) Europäisches Patentamt / European Patent Office / Office européen des brevets

(11) **EP 4 391 155 A1**

(12) **EUROPEAN PATENT APPLICATION**
published in accordance with Art. 153(4) EPC

(43) Date of publication:
**26.06.2024 Bulletin 2024/26**

(21) Application number: **22944030.0**

(22) Date of filing: **18.10.2022**

(51) International Patent Classification (IPC):
**H01M 10/615** $^{(2014.01)}$     **H01M 10/617** $^{(2014.01)}$

(86) International application number:
**PCT/CN2022/125957**

(87) International publication number:
**WO 2024/082139 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **LIU, Huanji**
**Ningde, Fujian 352100 (CN)**

• **YIN, Ziyi**
**Ningde, Fujian 352100 (CN)**
• **SUN, Xin**
**Ningde, Fujian 352100 (CN)**
• **JIN, Haizu**
**Ningde, Fujian 352100 (CN)**
• **ZHAO, Fenggang**
**Ningde, Fujian 352100 (CN)**

(74) Representative: **Gong, Jinping**
**CocreateIP**
**Neumarkterstr. 21**
**81673 München (DE)**

(54) **BATTERY AND ELECTRIC DEVICE**

(57) The present application discloses a battery and an electrical device. The battery includes at least one first battery cell and at least one second battery cell, an internal resistance of the first battery cell is greater than that of the second battery cell, and a heat transfer rate of the first battery cell is less than that of the second battery cell. The battery is provided with the first battery cell(s) having a relatively large internal resistance, which produces more heat. Meanwhile, the first battery cell also has a relatively small heat transfer rate, and therefore has good heat generation performance and thermal insulation function, thereby reducing the impact of external low temperature on the battery and solving the problem that the capacity of the battery significantly decreases at a low temperature.

FIG. 3

## Description

## Technical Field

The present application relates to the field of battery technology, and in particular, to a battery and an electrical device.

## Background Art

Existing batteries usually have poor low-temperature performance, and their capacity usually decreases significantly at low temperatures.

## Summary

In view of the above problems, the present application provides a battery and an electrical device, which can solve the problem that the capacity of batteries decreases significantly at low temperatures.

Embodiments of the present application are implemented as follows.

In a first aspect, an embodiment of the present application provides a battery, including at least one first battery cell and at least one second battery cell, where an internal resistance of each of the at least one first battery cell is greater than that of each of the at least one second battery cell, and a heat transfer rate of the first battery cell is less than that of the second battery cell.

In this technical solution of the embodiment of the present application, the second battery cell has relatively small internal resistance and low heat loss, which is conducive to maintaining a good discharge capacity of the overall battery; the first battery cell has relatively large internal resistance to generate more heat; meanwhile, the first battery cell has relatively small heat transfer rate, and therefore has good heat generation performance and thermal insulation function, thereby reducing the impact of external low temperatures on the battery and solving the problem that the capacity of the battery significantly decreases at low temperatures.

In some embodiments, the internal resistance of the first battery cell is R1, the internal resistance of the second battery cell is R2, the heat transfer rate of the first battery cell is K1, and the heat transfer rate of the second battery cell is K2, satisfying at least one of the following conditions (a1) to (a4): (a1) $1.05 \leq R1/R2 \leq 2$; (a2) $1.2 \leq R1/R2 \leq 1.35$; (a3) $0.2 \leq K1/K2 \leq 0.9$; and (a4) $0.4 \leq K1/K2 \leq 0.6$. In this embodiment, the ratio of internal resistances of the first battery cell and the second battery cell is controlled within a range, so that the first battery cell has appropriate heat production; and the ratio of heat transfer rates of the first battery cell and the second battery cell is controlled within a range, so that the first battery cell has appropriate thermal insulation capacity.

In some embodiments, the first battery cell includes a first positive electrode plate and a first negative electrode plate, and the second battery cell includes a second positive electrode plate and a second negative electrode plate, satisfying at least one of the following conditions (b1) and (b2): (b1) a resistance of the first positive electrode plate is greater than that of the second positive electrode plate; and (b2) a resistance of the first negative electrode plate is greater than that of the second negative electrode plate. In this embodiment, the resistance of the electrode plate of the first battery cell is greater than that of the electrode plate of the second battery cell, which can more conveniently control the internal resistance of the first battery cell to be greater than that of the second battery cell.

In some embodiments, the first battery cell includes a first positive current collector and a first negative current collector, and the second battery cell includes a second positive current collector and a second negative current collector, satisfying at least one of the following conditions (c1) and (c2): (c1) a resistance of the first positive current collector is greater than that of the second positive current collector; and (c2) a resistance of the first negative current collector is greater than that of the second negative current collector. In this embodiment, the resistance of the current collector of the first battery cell is greater than that of the current collector of the second battery cell, which can more simply and conveniently control the internal resistance of the first battery cell to be greater than that of the second battery cell, compared with control on resistances by adjusting active materials of electrode plates.

In some embodiments, a resistivity of the first positive current collector and/or the first negative current collector is $10^{-7}$ Ω/m to $10^{-6}$ Ω/m. In this embodiment, the current collector of the first battery cell has a specific resistivity, so that the first battery cell has appropriate heat generation capacity and heat loss, and the first battery cell effectively reduces the impact of external low temperatures on the battery and can also have good discharge capacity.

In some embodiments, the heat transfer rate of the first battery cell is $\leq 20°C/h$. In this embodiment, the heat transfer rate of the first battery cell is controlled below a specific standard to achieve an appropriate thermal insulation function.

In some embodiments, the first battery cell includes a first positive current collector and a first negative current collector, and the second battery cell includes a second positive current collector and a second negative current collector, satisfying at least one of the following conditions (d1) and (d2): (d1) a thermal conductivity of the first positive current collector is less than that of the second positive current collector; and (d2) a thermal conductivity of the first negative current collector is less than that of the second negative current collector. In this embodiment, the thermal conductivity of the current collector of the first battery cell is less than that of the current collector of the second battery cell, which can more simply and conveniently control the heat transfer rate of the first battery cell to be less than that of the second battery cell, compared with control on thermal conductivities by adjusting active materials of electrode plates.

In some embodiments, at least one of the following conditions (e1) and (e2) is satisfied: (e1) the thermal conductivity of the first positive current collector and/or the first negative current collector is 5 W/(m•°C) to 50 W/(m•°C); and (e2) the thermal conductivity of the first positive current collector and/or the first negative current collector is 10 W/(m•°C) to 30 W/(m•°C). In this embodiment, the current collector of the first battery cell has a specific thermal conductivity, so that the first battery cell has an appropriate heat transfer rate, which enables good thermal insulation function of the first battery cell.

In some embodiments, at least one of the following conditions (f1) to (f3) is satisfied: (f1) the first positive current collector and/or the first negative current collector are separately made of one selected from the group consisting of iron, constantan, nickel-based alloy, and iron-based alloy; (f2) the first positive current collector and/or the first negative current collector are made of stainless steel; and (f3) the first positive current collector and/or the first negative current collector are separately made of one selected from the group consisting of duplex stainless steel and austenitic stainless steel. In this embodiment, the current collector of the first battery cell is made of a specific material and has a large resistance and a low heat transfer rate, so that the first battery cell can have a high internal resistance and a low heat transfer rate.

In some embodiments, at least one of the following conditions (g1) to (g3) is satisfied: (g1) a capacity of the first battery cell is greater than that of the second battery cell; (g2) a ratio of the capacity of the first battery cell to the capacity of the second battery cell is 1.03 to 1.2; and (g3) the ratio of the capacity of the first battery cell to the capacity of the second battery cell is 1.05 to 1.1. In this embodiment, considering relatively larger heat loss of the first battery cell, the first battery cell is provided to have a larger capacity, which prevents rapid depletion of the capacity of the first battery cell from affecting release of the capacity of the second battery cell, and is beneficial to more thorough release of the capacity of the second battery cell. Meanwhile, the upper limit of the ratio is limited to prevent excessive capacity of the first battery cell and benefit thorough release of the capacity of the first battery cell.

In some embodiments, the at least one first battery cell and the at least one second battery cell are alternately distributed in sequence. In this embodiment, the first battery cells and the second battery cells are alternated, so that the low-temperature environment outside the second battery cells can be well improved by the first battery cells, which can better solve the problem that the capacity of the battery significantly decreases at low temperatures.

In some embodiments, first battery cells are distributed on two sides of any one of the at least one second battery cells. In this embodiment, the first battery cells are distributed on the two sides of the second battery cell, so that the low-temperature environment outside the second battery cell can be better improved by the first battery cells.

In some embodiments, the battery includes a central region and an edge region surrounding the central region, the at least one second battery cell is distributed in the central region, and the at least one first battery cell is distributed in the edge region. In this embodiment, the first battery cells are distributed in the edge region of the battery, so that the impact of external low temperatures on the battery is effectively reduced through the first battery cells, and the arrangement of the battery cells within the battery is simple.

In some embodiments, a plurality of second battery cells are distributed side by side in the central region in a first direction, the first direction being parallel to a thickness direction of the second battery cells; in portions of the edge region which are located on two sides of the central region in the first direction, the at least one first battery cell is parallel to the second battery cells; and in portions of the edge region which are located on two sides of the central region in a second direction, the at least one first battery cell is perpendicular to the second battery cells, the second direction being perpendicular to the thickness direction of the second battery cells. In this embodiment, on the two sides in the direction that the second battery cells are distributed side by side, and the at least one first battery cell is parallel to the second battery cells; and on the two sides perpendicular to the direction that the second battery cells are distributed side by side, and the at least one first battery cell is perpendicular to the second battery cells. The above arrangement facilitates that the second battery cells in the central region are surrounded by a few first battery cells, which is conducive to increasing the proportion of the second battery cells in the battery and better maintaining the overall discharge capacity of the battery.

In some embodiments, the first battery cell and the second battery cell are connected in series in a first circuit. In this embodiment, the first battery cell and the second battery cell are connected in series in a single circuit, with simple circuit connection and convenient assembly.

In some embodiments, the first battery cell is connected in series in a second circuit, the second battery cell is connected in series in a third circuit, and the second circuit and the third circuit are provided to have: a first state in which the second circuit operates independently, and a second state in which the second circuit and the third circuit operate in series. In this embodiment, the circuit where the first battery cell is located may operate independently or operate in series with the circuit where the second battery cell is located, so that the circuit where the first battery cell is located can be first opened to increase the environmental temperature, and then the first battery cell and the second battery cell are enabled to operate together to better reduce the impact of the external low-temperature environment on the second battery cell, so as to better reduce the impact of the external low temperature on the overall battery.

In a second aspect, the present application provides an electrical device, including the battery in the foregoing embodiment.

The above description is only a summary of the technical solutions of the present application. In order to understand the technical means of the present application more clearly, it can be implemented in accordance with the content of the specification; and in order to make the above and other objectives, features, and advantages of the present application more obvious and easier to understand, the specific embodiments of the present application are cited below.

## Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.

FIG. 1 is a schematic structural diagram of a vehicle provided in some embodiments of the present application;

FIG. 2 is an exploded view of a battery provided in some embodiments of the present application;

FIG. 3 is a schematic diagram of a first internal structure of the battery provided in some embodiments of the present application;

FIG. 4 is a schematic diagram of a second internal structure of the battery provided in some embodiments of the present application;

FIG. 5 is a schematic diagram of a third internal structure of the battery provided in some embodiments of the present application;

FIG. 6 is a schematic diagram of a fourth internal structure of the battery provided in some embodiments of the present application;

FIG. 7 is a schematic diagram of a fifth internal structure of the battery provided in some embodiments of the present application;

FIG. 8 is a schematic diagram of a first circuit connection of the battery provided in some embodiments of the present application; and

FIG. 9 is a schematic diagram of a second circuit connection of the battery provided in some embodiments of the present application.

Reference numerals:

1000 - vehicle;

100 - battery; 200 - controller; 300 - motor;

10 - box; 11 - first portion; 12 - second portion;

20 - battery cell; 21 - first battery cell; 22 - second battery cell;

A - first direction; B - second direction; C - first circuit; D - second circuit; E - third circuit.

**Detailed Description of Embodiments**

In order to make the objectives, technical solutions, and advantages of the embodiments of the present application clearer, the technical solutions in the embodiments of the present invention will be described clearly and completely below. If specific conditions are not indicated in the embodiments, conventional conditions or conditions recommended by manufacturers shall be followed. Reagents or instruments not indicated by manufacturers are all conventional products that can be obtained through commercial purchase.

The embodiments of the technical solutions of the present application will be described in detail below with reference to the accompanying drawings. The following embodiments are only used to illustrate the technical solutions of the present application more clearly, and therefore are only examples and cannot be used to limit the protection scope of the present application.

Unless otherwise defined, all technical and scientific terms used herein have the same meanings as those commonly understood by technical personnel in the technical field of the present application; the terms used herein are only for the purpose of describing specific embodiments and are not intended to limit the present application; and the terms "include" and "have" in the specification and claims of the present application, the accompanying drawings, and any variations thereof, are intended to cover non-exclusive inclusion.

In the description of the embodiments of the present application, the technical terms "first", "second", and the like are only used to distinguish different objects and cannot be understood as indicating or implying importance in relativity or implying a quantity, specific order, or primary and secondary relationship of the indicated technical features.

In the description of the embodiments of the present application, an orientation or positional relationship indicated by the term "inner", "outer", or the like is based on an orientation or positional relationship shown in the accompanying drawings, and is merely for ease of describing the embodiments of the present application and simplifying the description, but does not indicate or imply that an apparatus or element referred to must have a specific orientation or be constructed and operated in a specific orientation, and therefore cannot be understood as a limitation on the embodiments of the present application.

In the description of the embodiments of the present application, unless otherwise explicitly specified and defined, the terms "mounting", "connecting", "connection", "fix", and the like should be understood in a broad sense, for example, the "connection" may be a fixed connection, a detachable connection, or an integrated connection, may be a direct connection, or may be an indirect connection via an intermediate medium. Those of ordinary skill in the art may appreciate the specific meanings of the foregoing terms in the embodiments of the present application according to specific circumstances.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

In the embodiments of the present application, the same reference numerals represent the same components, and for simplicity, detailed descriptions of the same components are omitted in different embodiments. It should be understood that dimensions such has height, length, and width of various components and dimensions such has height, length, and width of integrated apparatuses in the embodiments of the present application shown in the accompanying drawings are only illustrative and should not constitute any limitations on the present application.

A battery cell refers to a minimum unit that constitutes a battery pack. The battery cell may be a secondary battery or a primary battery, or may be a lithium-sulfur battery, a sodium-ion battery, or a magnesium-ion battery, but is not limited to this.

The battery cell may include a shell, an electrode assembly, and an electrolytic solution, where the electrode assembly and the electrolytic solution are accommodated in the shell.

The shell may include a shell body and a cover body. The shell body is a component fitting the cover body to form an internal sealing space for the battery cell, where the formed sealing space may be used for accommodating the electrode assembly, the electrolytic solution, and other components. The cover body refers to a component that covers an opening of the shell body to isolate an internal environment of the battery cell from an external environment, a shape of the cover body may adapt to that of the shell body to match the shell body, and functional components such as an electrode terminal and a pressure relief structure may further be disposed on the cover body. A sealing ring may be provided between the opening of the shell body and the cover body to seal the shell body and the cover body.

The shell body and the cover body may be in various shapes and sizes, such as cuboid, cylinder, or hexagonal prism. Specifically, the shapes of the shell body and the cover body may be determined according to a specific shape and size of the electrode assembly. The shell body and the cover body may be made of various materials, such as but not limited to copper, iron, aluminum, stainless steel, aluminum alloy, and other metals. The sealing ring may be made of various materials, such as but not limited to polypropylene (PP), polycarbonate (PC), polyethylene terephthalate (PET), and other materials with electrolytic solution corrosion resistance, high toughness and fatigue resistance. A coating may be formed on an outer surface of the shell body, and the coating may be made of various materials, such as but not limited to Ni, Cr, and other corrosion-resistant materials.

The electrode assembly may be composed of a positive electrode plate, a negative electrode plate, and a separator. The battery cell mainly relies on movement of metal ions between the positive electrode plate and the negative electrode plate to work. The positive electrode plate includes a positive current collector and a positive electrode active material layer. Taking a lithium-ion battery cell as an example, a material of the positive current collector may be aluminum, and a positive electrode active material of the positive electrode active material layer may be lithium cobalate, lithium iron phosphate, ternary lithium, lithium manganate, a lithium rich manganese-based material, a lithium sulfur material, or the like. The negative electrode plate includes a negative current collector and a negative electrode active material layer, a material of the negative current collector may be copper, and a negative electrode active material of the negative electrode active material layer may be carbon, silicon, or the like. Moreover, the electrode assembly may be of a wound structure or a stacked structure, and the embodiments of the present application are not limited thereto.

At present, in view of the development of the market situation, use of power batteries is increasingly widespread. Power batteries are not only used in energy storage power systems such as hydropower, firepower, wind power, and solar power plants, but also widely used in electric vehicles such as electric bicycles, electric motorcycles, and electric vehicles, as well as in various fields such as military equipment and aerospace. With the continuous expansion of the application fields of power batteries, their market demand is also increasing.

The applicant noticed that existing batteries are prone to aggravated polarization and severe lithium precipitation in low-temperature environments, which not only affect safety of the batteries but also significantly reduce capacity of the batteries.

In order to solve the above problems, a thermal insulation structure is usually added to a battery in currently proposed technical solutions to reduce the impact of external low temperatures on the battery. However, due to the addition of the thermal insulation structure, the structure of the battery is more complex, the production and assembly processes are more cumbersome, costs are increased, and more importantly, the energy density of the battery is significantly reduced.

After in-depth research, the applicant found, by replacing some battery cells in a battery with battery cells with larger internal resistance, the battery cells with larger internal resistance can generate more heat in low-temperature environments, which is beneficial to reducing the impact of external low temperatures on the battery; and the battery cells with smaller internal resistance have lower heat loss, which maintains good discharge capacity of the entire battery. Moreover, in this method, only adjustments need to be made to the internal material of the battery cells, and additional structures are not required, so as to avoid problems such as more complex battery structures, more complicated production and assembly processes, and cost increase, and more importantly, to better maintain the energy density of the battery.

Based on the above considerations, the applicant designed a battery, which is equipped with second battery cells and first battery cells with internal resistance greater than that of the second battery cells, thereby solving the problem that the capacity of the battery significantly decreases at low temperatures.

In the present application, the electrical device may be in various forms, such as a mobile phone, a portable device, a notebook computer, a scooter, an electric vehicle, a ship, a spacecraft, an electric toy, or an electric tool. For example, the spacecraft includes an airplane, a rocket, a space shuttle, a spaceship, or the like; the electric toy includes a fixed or mobile electric toy, such as a game console, an electric car toy, an electric ship toy, or an electric aircraft toy; and the electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer.

For convenient description, the following embodiments are described by an example of a vehicle as an electrical device in an embodiment of the present application.

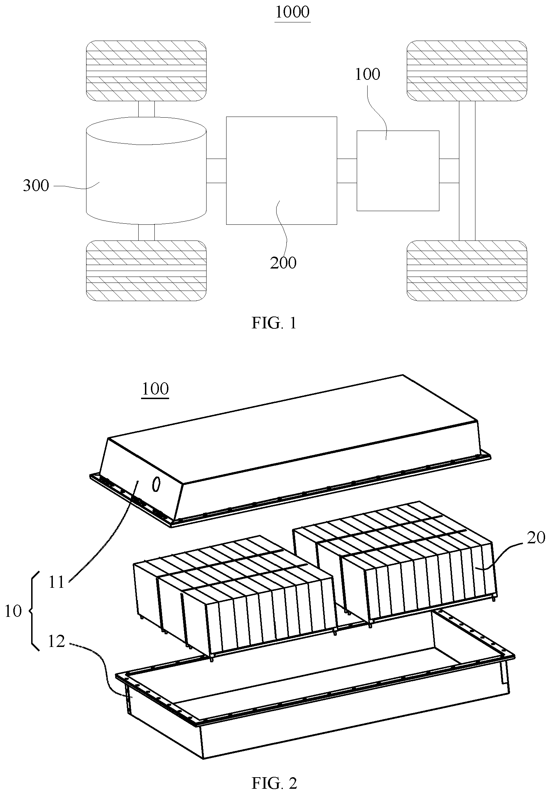

Refer to FIG. 1. FIG. 1 is a schematic structural diagram of a vehicle 1000 provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be provided to supply power to the vehicle 1000. For example, the battery 100 may be used as an operation power supply of the vehicle 1000. The vehicle 1000 may further include a controller 200 and a motor 300. The controller 200 is used to control the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

In the present application, the battery 100 refers to a single physical module that includes a plurality of battery cells 20 to provide higher voltage and capacity. The battery 100 may include a box 10 for packaging the plurality of battery cells 20, and the box 10 may prevent liquid or other foreign matters from affecting charging or discharging of the battery cells 20.

Refer to FIG. 2. FIG. 2 is an exploded view of a battery 100 provided in some embodiments of the present application. The battery 100 may include a box 10 and a plurality of battery cells 20, where the plurality of battery cells 20 are accommodated within the box 10. The box 10 is used for accommodating the battery cells 20, and the box 10 may have many structures. In some embodiments, the box 10 may include a first portion 11 and a second portion 12, the first portion 11 and the second portion 12 cover each other, and the first portion 11 and the second portion 12 jointly confine an accommodating space for accommodating the battery cells 20. The second portion 12 may be of a hollow structure with an opening at one end, the first portion 11 is of a plate-like structure, and the first portion 11 covers an open side of the second portion 12 to form the box 10 with the accommodating space; or each of the first portion 11 and the second portion 12 may be of a hollow structure with an open side, and the open side of the first portion 11 covers the open side of the second portion 12 to form the box 10 with the accommodating space. Of course, the first portion 11 and the second portion 12 may be in various shapes, such as cylindrical or cuboid.

The battery 100 may be in a form of a battery module, a battery pack, or the like. In the battery 100, the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Alternatively, the plurality of battery cells 20 may first be connected in series, in parallel, or in series and parallel to form a module, and then a plurality of modules may be connected in series, in parallel, or in series and parallel to form a whole accommodated in the box 10. The battery 100 may further include other structures, for example, the plurality of battery cells 20 may be electrically connected through a current collecting component to implement the parallel, series, or series-parallel connection of the plurality of battery cells 20.

Next, the battery 100 proposed in the embodiment of the present application will be explained in detail with reference to the accompanying drawings.

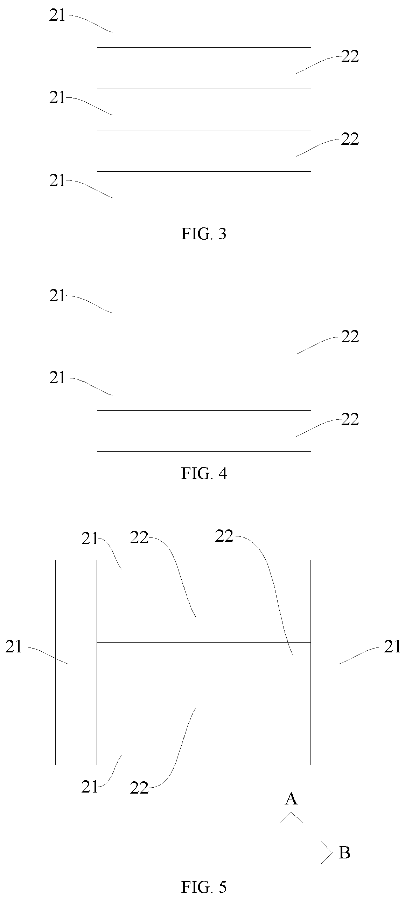

Refer to FIGs. 3 to 7. In a first aspect, an embodiment of the present application provides a battery 100, including at least one first battery cell 21 and at least one second battery cell 22, where an internal resistance of the first battery cell 21 is greater than that of the second battery cell 22, and a heat transfer rate of the first battery cell 21 is less than that of the second battery cell 22.

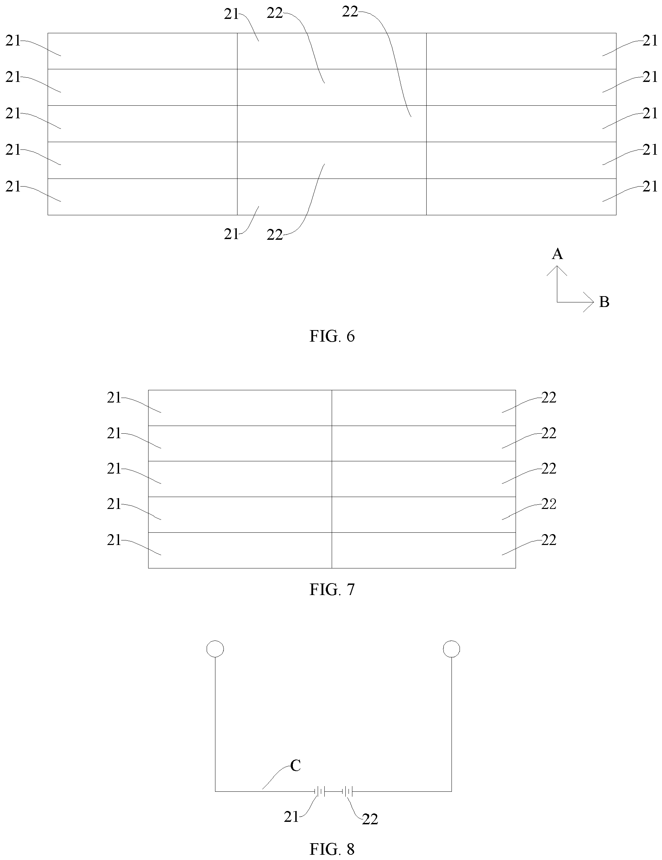

In the battery 100, an arrangement order of the first battery cells 21 and the second battery cells 22 is not limited. For example, the plurality of first battery cells 21 and second battery cell 22 may be alternately distributed, as shown in FIGs. 3 and 4; or one of the first battery cells 21 and the second battery cells 22 may be distributed around the other, as shown in FIGs. 5 and 6; or the plurality of first battery cells 21 may be individually concentrated and the plurality of second battery cells 22 may be individually concentrated, as shown in FIG. 7; or the first battery cells 21 and the second battery cells 22 are not regularly arranged.

The first battery cell 21 and the second battery cell 22 are battery cells 20 with different internal resistances and heat transfer rates. Factors causing the different internal resistances and heat transfer rates between the two may be one or more of different materials of current collectors, different specifications of the current collectors, different materials of active material layers, different specifications of the active material layers, and the like. Between the first battery cell 21 and the second battery cell 22, other conditions may be selected as the same or different according to requirements except the different internal resistances and heat transfer rates and the different factors causing the different internal resistances and heat transfer rates.

In the present application, the second battery cell 22 may be selected as a conventional battery cell 20, and the first battery cell 21 is a battery cell 20 with an internal resistance higher than a conventional situation and a heat transfer rate lower than a conventional situation.

In the present application, the internal resistance may be tested by a well-known testing method in the art. For example, the internal resistance is a DCR value of HPPC pulse test in 50% SOC.

In the present application, the heat transfer rate of the battery cell may be tested by a well-known testing method in the art. For example, the heat transfer rate of the battery cell 20 may be tested by the following method: charging the battery cell 20 at a rate of 0.5C and discharging the same at a rate of 1C for 1 cycle, then testing the temperature T1 of the battery cell 20 at this time with an infrared real-time thermometer, and testing the temperature T2 of the battery cell 20 placed in a 25°C environment for 1 h, where the heat transfer rate of the battery cell 20 is (T1-T2)°C/h.

In the technical solution of the embodiment of the present application, the second battery cell 22 has relatively small internal resistance and low heat loss, which is conducive to maintaining a good discharge capacity of the overall battery 100; and the first battery cell 21 has relatively large internal resistance and generates more heat, which is conducive to reducing the impact of external low temperatures on the battery 100 and can solve the problem that the capacity of the battery 100 significantly decreases at low temperatures. Meanwhile, the first battery cell 21 with a relatively small heat transfer rate has not only good heat generation performance but also thermal insulation function, thereby better reducing the impact of external low temperatures on the battery 100.

In some embodiments, the internal resistance of the first battery cell 21 is R1, the internal resistance of the second battery cell 22 is R2, the heat transfer rate of the first battery cell 21 is K1, and the heat transfer rate of the second battery cell 22 is K2, satisfying at least one of the following conditions (a1) to (a4): (a1) $1.05 \leq R1/R2 \leq 2$; (a2) $1.2 \leq R1/R2 \leq 1.35$; (a3) $0.2 \leq K1/K2 \leq 0.9$; and (a4) $0.4 \leq K1/K2 \leq 0.6$.

A ratio of internal resistances between the first battery cell 21 and the second battery cell 22 is not limited. For example, the ratio of R1/R2 is, for example, but not limited to, any value of or a range value between any two of 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, and 2. If the ratio is too small, the heat production of the first battery cell 21 is limited; and if the ratio is too large, excessive polarization occurs, which may affect capacity and energy density.

A ratio of heat transfer rates between the first battery cell 21 and the second battery cell 22 is not limited. For example, the ratio of K1/K2 is, for example, but not limited to, any value of or a range value between any two of 0.2, 0.3, 0.4, 0.5, 0.6, 0.7, 0.8, and 0.9.

In some embodiments, the first battery cell 21 includes a first positive electrode plate and a first negative electrode plate, and the second battery cell 22 includes a second positive electrode plate and a second negative electrode plate, satisfying at least one of the following conditions (b1) and (b2): (b1) a resistance of the first positive electrode plate is greater than that of the second positive electrode plate; and (b2) a resistance of the first negative electrode plate is greater than that of the second negative electrode plate.

When the resistance of the first positive electrode plate is greater than that of the second positive electrode plate and/or the resistance of the first negative electrode plate is greater than that of the second negative electrode plate, the internal resistance of the first battery cell 21 can be greater than that of the second battery cell 22 in a case that other conditions of the first battery cell 21 and the second battery cell 22 remain consistent. Based on this, as an example, the difference between the first battery cell 21 and the second battery cell 22 is only due to the use of different electrode plates, and all other conditions remain the same.

In the present application, the resistance may be tested by a well-known testing method in the art. For example, the resistance of the positive electrode plate may be tested by using a HIOKI BT3562 internal resistance tester, including: cutting the electrode plate into a 10 cm×10 cm square test sample, clamping upper and lower sides of the test sample between two conductive terminals of the internal resistance tester, applying certain pressure for fixing, and testing the resistance R of the test sample, where the conductive terminal has a diameter of 14 mm, the applied pressure is 15 MPa-27 MPa, the sampling time range is 5 s-17 s, and a resistivity $\rho$ of the positive electrode plate is calculated according to a formula $\rho = R \times S/L$, where S is an area of the test sample, and L is a thickness of the test sample, that is, a thickness of the positive electrode plate.

In this embodiment, the resistance of the electrode plate of the first battery cell 21 is greater than that of the electrode plate of the second battery cell 22, which can more conveniently control the internal resistance of the first battery cell 21 to be greater than that of the second battery cell 22.

In some embodiments, the first battery cell 21 includes a first positive current collector and a first negative current collector, and the second battery cell 22 includes a second positive current collector and a second negative current collector, satisfying at least one of the following conditions (c1) and (c2): (c1) a resistance of the first positive current collector is greater than that of the second positive current collector; and (c2) a resistance of the first negative current collector is greater than that of the second negative current collector.

When the resistance of the first positive current collector is greater than that of the second positive current collector and/or the resistance of the first negative current collector is greater than that of the second negative current collector, the internal resistance of the first battery cell 21 can be greater than that of the second battery cell 22 in a case that other conditions of the first battery cell 21 and the second battery cell 22 remain consistent. Based on this, as an example, the difference between the first battery cell 21 and the second battery cell 22 is only due to the use of different current collectors, and all other conditions remain the same.

The resistance of the current collector may be increased by increasing the volume of the current collector, changing the material of the current collector, or the like. Considering that an increase in volume of a current collector will increase the space, mass, and the like of the current collector, the resistances of the current collectors of the first battery cell 21 and the second battery cell 22 may be optionally controlled by selecting different material types of current collectors.

Considering the material types of current collectors, optionally, in the second battery cell 22, the current collectors of the electrode plates are selected according to conventional types, for example, the second positive current collector is made of aluminum, and the second negative current collector is made of copper. On this basis, in the first battery cell 21, at most one of the first positive current collector and the first negative current collector is selected according to a conventional type, that is, the first positive current collector is made of aluminum or the first negative current collector is made of copper. Of course, both the first positive current collector and the first negative current collector may be made of materials with higher resistances than those of conventional current collectors.

In this embodiment, the resistance of the current collector of the first battery cell 21 is greater than that of the current collector of the second battery cell 22, which can more simply and conveniently control the internal resistance of the first battery cell 21 to be greater than that of the second battery cell 22, compared with control on resistances by adjusting active materials of electrode plates.

In some embodiments, a resistivity of the first positive current collector and/or the first negative current collector is $10^{-7}$ $\Omega$/m to $10^{-6}$ $\Omega$/m.

The resistivity of the first positive current collector and/or the first negative current collector is, for example, but not limited to, any value of or a range value between any two of $10^{-7}$ $\Omega$/m, $2\times10^{-7}$ $\Omega$/m, $3\times10^{-7}$ $\Omega$/m, $4\times10^{-7}$ $\Omega$/m, $5\times10^{-7}$ $\Omega$/m, $6\times10^{-7}$ $\Omega$/m, $7\times10^{-7}$ $\Omega$/m, $8\times10^{-7}$ $\Omega$/m, $9\times10^{-7}$ $\Omega$/m, and $10^{-6}$ $\Omega$/m.

In the present application, the resistivity may be tested by a well-known testing method in the art. For example, a base material may be tested by using an FT-341 four-probe resistance tester, with a probe spacing of 1 mm and a base material sampling area of 10 cm$\times$10 cm.

In this embodiment, the current collector of the first battery cell 21 has a specific resistivity, so that the first battery cell 21 has appropriate heat generation capacity and heat loss, and the first battery cell 21 effectively reduces the impact of external low temperatures on the battery 100 and can also have good discharge capacity.

In some embodiments, the heat transfer rate of the first battery cell 21 is $\leq$ 25°C/h, such as 5°C/h $\leq$ the heat transfer rate of the first battery cell 21 $\leq$ 25°C/h.

Optionally, the heat transfer rate of the first battery cell 21 is $\leq$ 20°C/h, for example, 10°C/h $\leq$ the heat transfer rate of the first battery cell 21 $\leq$ 20°C/h.

If the heat transfer rate of the first battery cell 21 is too large, the thermal insulation effect is poor; and if the heat transfer rate of the first battery cell 21 is too small, excessive heat accumulation may occur to pose safety risks.

In this embodiment, the heat transfer rate of the first battery cell 21 is controlled below a specific standard to achieve an appropriate thermal insulation function.

In some embodiments, the first battery cell 21 includes a first positive current collector and a first negative current collector, and the second battery cell 22 includes a second positive current collector and a second negative current collector, satisfying at least one of the following conditions (d1) and (d2): (d1) a thermal conductivity of the first positive current collector is less than that of the second positive current collector; and (d2) a thermal conductivity of the first negative current collector is less than that of the second negative current collector.

In the present application, the thermal conductivity of the current collector may be tested by a well-known testing method in the art. For example, with reference to GB/T-22588-2008 standards, an LDR-I transient laser thermal conductivity tester is used.

When the thermal conductivity of the first positive current collector is less than that of the second positive current collector and/or the thermal conductivity of the first negative current collector is less than that of the second negative current collector, the internal resistance of the first battery cell 21 can be greater than that of the second battery cell 22 in a case that other conditions of the first battery cell 21 and the second battery cell 22 remain consistent. Based on this, as an example, the difference between the first battery cell 21 and the second battery cell 22 is only due to the use of different current collectors, and all other conditions remain the same.

Optionally, in the second battery cell 22, the current collectors of the electrode plates are selected according to conventional types, for example, the second positive current collector is made of aluminum, and the second negative current collector is made of copper. On this basis, in the first battery cell 21, at most one of the first positive current collector and the first negative current collector is selected according to a conventional type, that is, the first positive current collector is made of aluminum or the first negative current collector is made of copper. Of course, both the first positive current collector and the first negative current collector may be made of materials with lower thermal conductivities than those of conventional current collectors.

In this embodiment, the thermal conductivity of the current collector of the first battery cell 21 is less than that of the current collector of the second battery cell 22, which can more simply and conveniently control the heat transfer rate of the first battery cell 21 to be less than that of the second battery cell 22, compared with control on thermal conductivities by adjusting active materials of electrode plates.

In some embodiments, at least one of the following conditions (e1) and (e2) is satisfied: (e1) the thermal conductivity of the first positive current collector and/or the first negative current collector is 5 W/(m•°C) to 50 W/(m•°C); and (e2) the thermal conductivity of the first positive current collector and/or the first negative current collector is 10 W/(m•°C) to 30 W/(m•°C).

The thermal conductivity of the first positive current collector and/or the first negative current collector is, for example, but not limited to, any value of or a range value between any two of 5 W/(m•°C), 10 W/(m•°C), 15 W/(m•°C), 20 W/(m•°C), 25 W/(m•°C), 30 W/(m•°C), 35 W/(m•°C), 40 W/(m•°C), 45 W/(m•°C), and 50 W/(m•°C). The thermal conductivity of the first positive current collector and/or the first negative current collector is, for example, but not limited to, any value of or a range value between any two of 10 W/(m•°C), 15 W/(m•°C), 20 W/(m•°C), 25 W/(m•°C), and 30 W/(m•°C).

In this embodiment, the current collector of the first battery cell 21 has a specific thermal conductivity, so that the first battery cell 21 has an appropriate heat transfer rate, which enables good thermal insulation function of the first battery cell 21.

In some embodiments, at least one of the following conditions (f1) to (f3) is satisfied: (f1) the first positive current collector and/or the first negative current collector are separately made of one of iron, constantan, nickel-based alloy, and iron-based alloy; (f2) the first positive current collector and/or the first negative current collector are made of stainless steel; and (f3) the first positive current collector and/or the first negative current collector are separately made of one of duplex stainless steel and austenitic stainless steel.

In the above, compared with copper and aluminum base materials, the stainless steel serving as an iron-based alloy has the characteristics of low thermal conductivity and high resistance; and compared with other stainless steel base materials, the duplex stainless steel and the austenitic stainless steel have excellent machining performance and strong corrosion resistance. The austenitic stainless steel is, for example, stainless steel 304, stainless steel 316, or stainless steel 316L, or the like.

In the embodiment where the first positive current collector and/or the first negative current collector are made of stainless steel, because the stainless steel has higher areal density than conventional current collector materials (copper, aluminum), in order to reduce the impact of the stainless steel current collector on the energy density of the first battery cell 21, the thickness of the stainless steel current collector may be controlled to be less than that of the conventional material current collector, showing that the thickness of the first battery cell 21 is slightly less than that of the second battery cell 22.

In this embodiment, the current collector of the first battery cell 21 is made of a specific material and has a large resistance and a low heat transfer rate, so that the first battery cell 21 can have a high internal resistance and a low heat transfer rate.

In some embodiments, at least one of the following conditions (g1) to (g3) is satisfied: (g1) a capacity of the first battery cell 21 is greater than that of the second battery cell 22; (g2) a ratio of the capacity of the first battery cell 21 to the capacity of the second battery cell 22 is 1.03 to 1.2; and (g3) the ratio of the capacity of the first battery cell 21 to the capacity of the second battery cell 22 is 1.05 to 1.1.

Factors causing different capacities of the first battery cell 21 and the second battery cell 22 may be different types of active materials used by the two, different coating quantities of active materials used by the two, and the like. For example, based on the foregoing ratio requirements of the capacities, the active materials for the first battery cell 21 and the second battery cell 22 are the same in type, but different in dosage. In this implementation, the first battery cell 21 and the second battery cell 22 are substantially the same in appearance specification, and the two are distributed side by side.

The ratio of the capacity of the first battery cell 21 to the capacity of the second battery cell 22 is, for example, but not limited to, any value of or a range value between any two of 1.03, 1.05, 1.08, 1.1, 1.12, 1.15, 1.18, and 1.2.

In other embodiments, the first battery cell 21 and the second battery cell 22 may be provided as either having a relatively large specification and capacity, hereinafter referred to as a large cell battery, and the other having a relatively small specification and capacity, hereinafter referred to as a small cell battery. A plurality of small cell batteries surround large cell batteries, for example, ones are nickel cobalt manganese batteries, and the others are iron lithium batteries. In this implementation, there may be significant differences in the capacity of the first battery cell 21 and the capacity of the second battery cell 22, and a ratio of the two is, for example, 0.1-10, 0.5-8, 0.7-6, or 0.9-5.

In the present application, the capacity may be tested by a well-known testing method in the art. For example, the battery cell 20 may be charged and discharged with 0.33C current for 3 cycles at 25°C, and the discharge capacity of the 3rd cycle is the capacity of the battery cell 20.

In this embodiment, considering relatively larger heat loss of the first battery cell 21, the first battery cell 21 is provided to have a larger capacity, which prevents rapid depletion of the capacity of the first battery cell 21 from affecting release of the capacity of the second battery cell 22, and is beneficial to more thorough release of the capacity of the second battery cell 22. Meanwhile, the upper limit of the ratio is limited to prevent excessive capacity of the first battery cell 21 and benefit thorough release of the capacity of the first battery cell 21.

With reference to FIGs. 3 and 4, in some embodiments, the first battery cells 21 and the second battery cells 22 are alternately distributed in sequence.

Taking the second battery cells 22 as references, the first battery cells 21 and the second battery cells 22 may be alternately distributed in a thickness direction, width direction, height direction, or the like of the second battery cell 22. For example, the first battery cells 21 and the second battery cells 22 are alternately distributed in the thickness direction of the second battery cells 22.

In this embodiment, the first battery cells 21 and the second battery cells 22 are alternated, so that the low-temperature environment outside the second battery cells 22 can be well improved by the first battery cells 21, which can better solve the problem that the capacity of the battery 100 significantly decreases at low temperatures.

In some embodiments, the first battery cells 21 are distributed on two sides of any of the second battery cells 22.

For example, the first battery cells 21 and the second battery cells 22 are alternately distributed in the thickness direction of the second battery cells 22, and the two sides where the first battery cells 21 are disposed are two sides of the second battery cells 22 in the thickness direction.

In this embodiment, the first battery cells 21 are distributed on the two sides of the second battery cell, so that the low-temperature environment outside the second battery cell 22 can be better improved by the first battery cells 21.

With reference to FIGs. 5 and 6, in some embodiments, the battery 100 includes a central region and an edge region surrounding the central region, the second battery cells 22 are distributed in the central region, and the first battery cells 21 are distributed in the edge region.

In this embodiment, the first battery cells 21 are distributed in the edge region of the battery 100, so that the impact of external low temperatures on the battery 100 is effectively reduced through the first battery cells 21, and the arrangement of the battery cells 20 within the battery 100 is simple.

In some embodiments, the plurality of second battery cells 22 are distributed side by side in the central region in a first direction A, the first direction A being parallel to the thickness direction of the second battery cells 22; in portions of the edge region which are located on two sides of the central region in the first direction A, the first battery cells 21 are parallel to the second battery cells 22; and in portions of the edge region which are located on two sides of the central region in a second direction B, the first battery cells 21 are perpendicular to the second battery cells 22, the second direction B being perpendicular to the thickness direction of the second battery cells 22.

When the second battery cells 22 are placed vertically, the first direction A and the second direction B are horizontal directions, that is, the first direction A and the second direction B are perpendicular to the height direction of the second battery cells 22 separately.

In this embodiment, on the two sides in the direction that the second battery cells 22 are distributed side by side, the first battery cells 21 are parallel to the second battery cells 22; and on the two sides perpendicular to the direction that the second battery cells 22 are distributed side by side, the first battery cells 21 are perpendicular to the second battery cells 22. The above arrangement facilitates that the second battery cells 22 in the central region are surrounded by a few first battery cells 21, which is conducive to increasing the proportion of the second battery cells 22 in the battery 100 and better maintaining the overall discharge capacity of the battery 100.

With reference to FIG. 8, in some embodiments, the first battery cell 21 and the second battery cell are connected in series in a first circuit C.

In this embodiment, the first battery cell 21 and the second battery cell 22 are connected in series in a single circuit, with simple circuit connection and convenient assembly.

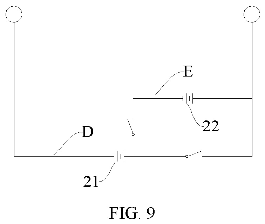

With reference to FIG. 9, in some embodiments, the first battery cell 21 is connected in series in a second circuit D, the second battery cell 22 is connected in series in a third circuit E, and the second circuit D and the third circuit E are provided to have: a first state in which the second circuit D operates independently, and a second state in which the second circuit D and the third circuit E operate in series.

In this embodiment, the circuit where the first battery cell 21 is located may operate independently or operate in series with the circuit where the second battery cell 22 is located, so that the circuit where the first battery cell 21 is located can be first opened to increase the environmental temperature, and then the first battery cell 21 and the second battery cell 22 are enabled to operate together to better reduce the impact of the external low-temperature environment on the second battery cell 22, so as to better reduce the impact of the external low temperature on the overall battery 100.

According to some embodiments of the present application, in the first battery cell 21, the material of the first positive current collector is stainless steel and the material of the first negative current collector is copper, or the material of the first positive current collector is aluminum and the material of the first negative current collector is stainless steel, or the material of the first positive current collector is stainless steel and the material of the first negative current collector is stainless steel. In the second battery cell 22, the material of the second positive current collector is aluminum and the material of the second negative current collector is copper.

In a second aspect, the present application provides an electrical device, including the battery 100 in the foregoing embodiment.

Some specific examples are listed to better illustrate the present application.

1. Preparation of a battery

Preparation of a positive electrode plate: lithium iron phosphate as a positive electrode active material, a conductive agent SP, and a binder PVDF were dispersed in NMP at a mass ratio of 96%: 1%: 3% to prepare a positive electrode slurry, which was then coated on a positive current collector to obtain the positive electrode plate.

Preparation of a negative electrode plate: artificial graphite as a negative electrode active material, a thickener CMC, a conductive agent SP, and a binder SBR were dispersed in deionized water at a mass ratio of 96.5%: 1.5%: 0.5%: 1.5% to prepare a negative electrode slurry, which was then coated on a negative current collector to obtain the negative electrode plate.

Assembly of a battery cell: the positive electrode plate, a separator, the negative electrode plate, and an electrolytic solution were assembled into the battery cell.

Assembly of the battery: the battery cells were assembled into the battery according to the arrangement shown in FIG. 3 or FIG. 5. With reference to FIG. 3, a quantity of first battery cells was 9, and a quantity of second battery cells was 8. With reference to FIG. 5, a quantity of first battery cells was 6, and a quantity of second battery cells was 11.

2. Testing methods

Internal resistance of the battery cell: at 25°C, the SOC of the battery cell was adjusted to 50%, then discharged with 4C current for 30 s, stood for 120 s, charged with 4C current for 30 s, and stood for 120 s, where the charging or discharging internal resistance of the battery may be obtained by dividing a voltage change before and after charging or discharging by the current.

Heat transfer rate of the battery cell: at 25°C, the battery cell was charged at a 0.5C rate and discharged at a 1C rate for 1 cycle, then a temperature change of the battery cell was observed with an infrared real-time thermometer, and a temperature decrease of the battery cell within 1 h was recorded.

Room-temperature energy density of the battery: the battery was charged and discharged with 0.33C constant current at room temperature for 3 cycles, where the current was calculated from a rated capacity of a module; and test energy at the 3rd cycle was recorded and divided by a mass of the module to obtain a room-temperature energy density of the module.

-20°C low-temperature energy density of the battery: the battery was charged and discharged with 0.33C constant current at -20°C for 1 cycle, where the current was calculated from the rated capacity of the module; and test energy at the 1st cycle was recorded and divided by the mass of the module to obtain a -20°C energy density of the module.

After the capacities of the first battery cells were released, the situation that the capacities of the second battery cells were released:

3. Experimental conditions and test results

Relevant conditions of the electrode plates used in each experimental group were shown in Table 1, relevant conditions of different battery cells used were shown in Table 2, and battery structures and test results were shown in Table 3.

Table 1

| Number of electrode plate | Type of current collector material | Resistance of current collector | Thermal conductivity of current collector | Thickness of current collector | Resistance of electrode plate |
|---|---|---|---|---|---|
| | | mohm | W/(m·°C) | μm | mohm |
| Positive electrode plate 1 | Stainless steel 316L | 4.1 | 11 | 15 | 549.0 |
| Positive electrode plate 2 | Al | 0.8 | 198 | 15 | 423.0 |
| Positive electrode plate 3 | Al | 1 | 165 | 8 | 452.0 |
| Negative electrode plate 1 | Stainless steel 316L | 4.1 | 11 | 10 | 23.5 |
| Negative electrode plate 2 | Stainless steel 304 | 3.8 | 20 | 10 | 17.6 |

(continued)

| Number of electrode plate | Type of current collector material | Resistance of current collector | Thermal conductivity of current collector | Thickness of current collector | Resistance of electrode plate |
|---|---|---|---|---|---|
| | | mohm | W/(m·°C) | μm | mohm |
| Negative electrode plate 3 | Stainless steel S31803 | 3.7 | 22 | 10 | 17.1 |
| Negative electrode plate 4 | Iron | 1.9 | 44 | 10 | 14.2 |
| Negative electrode plate 5 | Nickel-iron alloy | 2.2 | 30 | 10 | 16.5 |
| Negative electrode plate 6 | Iron-nickel alloy | 2.4 | 27 | 10 | 17.3 |
| Negative electrode plate 7 | Cu | 0.3 | 356 | 10 | 3.8 |

In the above, the current collector 5 was made of nickel-iron alloy, where the nickel was a main element and the iron content was less than 40%; and the current collector 6 was made of an iron-nickel alloy, where the iron was a main element and the nickel content was less than 40%.

Table 2

| Number | Number of positive electrode plate | Number of negative electrode plate | Internal resistance of battery cell | Heat transfer rate of battery cell | Capacity of battery cell |
|---|---|---|---|---|---|
| | | | (mohm) | (°C/h) | (Ah) |
| Battery cell 1 | Positive electrode plate 1 | Negative electrode plate 7 | 1787 | 24.2 | 41.58 |
| Battery cell 2 | Positive electrode plate 2 | Negative electrode plate 1 | 1864 | 19 | 41.58 |
| Battery cell 3 | Positive electrode plate 1 | Negative electrode plate 1 | 2162 | 12.5 | 41.58 |
| Battery cell 4 | Positive electrode plate 2 | Negative electrode plate 2 | 1906 | 18.8 | 41.58 |
| Battery cell 5 | Positive electrode plate 2 | Negative electrode plate 3 | 1887 | 18.8 | 41.58 |
| Battery cell 6 | Positive electrode plate 2 | Negative electrode plate 4 | 1767 | 22.5 | 41.58 |
| Battery cell 7 | Positive electrode plate 2 | Negative electrode plate 5 | 1800 | 21.7 | 41.58 |
| Battery cell 8 | Positive electrode plate 2 | Negative electrode plate 6 | 1826 | 20.8 | 41.58 |
| Battery cell 9 | Positive electrode plate 2 | Negative electrode plate 7 | 1789 | 27.2 | 38.2 |

(continued)

| Number | Number of positive electrode plate | Number of negative electrode plate | Internal resistance of battery cell | Heat transfer rate of battery cell | Capacity of battery cell |
|---|---|---|---|---|---|
| | | | (mohm) | (°C/h) | (Ah) |
| Battery cell 10 | Positive electrode plate 2 | Negative electrode plate 7 | 1623 | 32.6 | 38.5 |
| Battery cell 11 | Positive electrode plate 3 | Negative electrode plate 8 | 2162 | 12.5 | 38.5 |
| Battery cell 12 | Positive electrode plate 3 | Negative electrode plate 8 | 2162 | 12.5 | 44.3 |

The capacity of the battery cell 9 was less than that of the battery cell 10 due to decreases in thicknesses of the positive current collector and the negative current collector; and the capacity of the battery cell 12 was greater than that of the battery cell 11 due to increases in numbers of turns of the electrode plates.

Table 3

| Number | First battery cell | Second battery cell | Ratio of internal resistances | Ratio of thermal conductivities | Ratio of capacities | Arrangement | Room-temperature energy density of battery | -20°C low-temperature energy density of battery | Low-temperature capacity release rate of first battery cell | Low-temperature capacity release rate of second battery cell |
|---|---|---|---|---|---|---|---|---|---|---|
| | | | | | | | (Wh/kg) | (Wh/kg) | (%) | (%) |
| Example 1 | Battery cell 1 | Battery cell 10 | 1.1 | 0.7 | 1.08 | FIG. 3 | 124.3 | 85.8 | 100 | 93.90 |
| Example 2 | Battery cell 2 | Battery cell 10 | 1.1 | 0.6 | 1.08 | FIG. 3 | 121.6 | 87.6 | 100 | 97.80 |
| Example 3 | Battery cell 3 | Battery cell 10 | 1.3 | 0.4 | 1.08 | FIG. 3 | 117.7 | 94.2 | 100 | 98.20 |
| Example 4 | Battery cell 4 | Battery cell 10 | 1.2 | 0.6 | 1.08 | FIG. 3 | 118.1 | 85.5 | 100 | 99.50 |
| Example 5 | Battery cell 5 | Battery cell 10 | 1.2 | 0.6 | 1.08 | FIG. 3 | 120.9 | 87.2 | 100 | 97.10 |
| Example 6 | Battery cell 6 | Battery cell 10 | 1.1 | 0.7 | 1.08 | FIG. 3 | 123.2 | 84.2 | 100 | 94.60 |
| Example 7 | Battery cell 7 | Battery cell 10 | 1.1 | 0.7 | 1.08 | FIG. 3 | 123.5 | 85.9 | 100 | 96.30 |
| Example 8 | Battery cell 8 | Battery cell 10 | 1.1 | 0.6 | 1.08 | FIG. 3 | 122.7 | 86.2 | 100 | 97.90 |
| Example 9 | Battery cell 9 | Battery cell 10 | 1.1 | 0.8 | 1.08 | FIG. 3 | 133.5 | 85.8 | 100 | 91.70 |
| Example 10 | Battery cell 11 | Battery cell 10 | 1.3 | 0.4 | 1.00 | FIG. 3 | 110.2 | 88.1 | 100 | 85.90 |
| Example 11 | Battery cell 3 | Battery cell 10 | 1.3 | 0.4 | 1.08 | FIG. 5 | 117.8 | 96.1 | 100 | 99.00 |
| Example 12 | Battery cell 12 | Battery cell 10 | 1.3 | 0.4 | 1.15 | FIG. 3 | 108.9 | 90.8 | 91.40 | 100 |

EP 4 391 155 A1

(continued)

| Number | First battery cell | Second battery cell | Ratio of internal resistances | Ratio of thermal conductivities | Ratio of capacities | Arrangement | Room-temperature energy density of battery | -20°C low-temperature energy density of battery | Low-temperature capacity release rate of first battery cell | Low-temperature capacity release rate of second battery cell |
|---|---|---|---|---|---|---|---|---|---|---|
| | | | | | | | (Wh/kg) | (Wh/kg) | (%) | (%) |
| Comparative Example 1 | Battery cell 10 | Battery cell 10 | 1.0 | 1.0 | 1.00 | FIG. 3 | 130.8 | 78.5 | 100 | 100 |

In the above:

(1) The ratio of internal resistances refers to a ratio of the internal resistance of the first battery cell to the internal resistance of the second battery cell, and the ratio is a result of retaining one decimal place.

(2) The ratio of heat transfer rates refers to a ratio of the heat transfer rate of the first battery cell to the heat transfer rate of the second battery cell, and the ratio is a result of retaining one decimal place.

(3) The ratio of capacities refers to a ratio of the capacity of the first battery cell to the capacity of the second battery cell, and the ratio is a result of retaining one decimal place.

According to Tables 1 to 3, it can be seen that:
Compared with Comparative Example 1, the decrease in the energy density of the battery provided in the examples of the present application at a low temperature was significantly lower than that at room temperature due to the addition of the first battery cells with larger internal resistance and lower heat transfer rate.
The comparison between Example 3 and Example 10 shows that the ratio of capacities of the first battery cell and the second battery cell in Example 3 was greater than 1, and the ratio of capacities of the first battery cell and the second battery cell in Example 10 was equal to 1. Compared with Example 3, the energy density of the battery in Example 10 was reduced, and the capacity of the second battery cell was not fully released after the capacity of the first battery cell was released.
The comparison between Example 3 and Example 12 shows that the ratio of capacities of the first battery cell and the second battery cell in Example 3 was less than 1.1, and the ratio of capacities of the first battery cell and the second battery cell in Example 10 was greater than 1.1. Compared with Example 3, the energy density of the battery in Example 10 was reduced, and the capacity of the first battery cell was not fully released after the capacity of the second battery cell was released.
The embodiments described above are some of the embodiments of the present application, not all of them. The detailed descriptions of the embodiments of the present application are not intended to limit the scope of the present application, but only to represent the selected embodiments of the present application. All other embodiments obtained by those of ordinary skill in the art based on the embodiments of the present application without creative efforts shall fall within the protection scope of the present application.

**Claims**

1. A battery, comprising at least one first battery cell and at least one second battery cell, wherein an internal resistance of each of the at least one first battery cell is greater than an internal resistance of each of the at least one second battery cell, and a heat transfer rate of the first battery cell is less than a heat transfer rate of the second battery cell.

2. The battery according to claim 1, wherein the internal resistance of the first battery cell is R1, the internal resistance of the second battery cell is R2, the heat transfer rate of the first battery cell is K1, and the heat transfer rate of the second battery cell is K2, satisfying at least one of following conditions (a1) to (a4):

$$(a1)\ 1.05 \le R1/R2 \le 2;$$

$$(a2)\ 1.2 \le R1/R2 \le 1.35;$$

$$(a3)\ 0.2 \le K1/K2 \le 0.9;$$

and

$$(a4)\ 0.4 \le K1/K2 \le 0.6.$$

3. The battery according to claim 1 or 2, wherein the first battery cell comprises a first positive electrode plate and a first negative electrode plate, and the second battery cell comprises a second positive electrode plate and a second negative electrode plate, satisfying at least one of following conditions (b1) and (b2):

(b1) a resistance of the first positive electrode plate is greater than a resistance of the second positive electrode plate; and
(b2) a resistance of the first negative electrode plate is greater than a resistance of the second negative electrode plate.

4. The battery according to any one of claims 1-3, wherein the first battery cell comprises a first positive current collector and a first negative current collector, and the second battery cell comprises a second positive current collector and a second negative current collector, satisfying at least one of following conditions (c1) and (c2):

(c1) a resistance of the first positive current collector is greater than a resistance of the second positive current collector; and
(c2) a resistance of the first negative current collector is greater than a resistance of the second negative current collector.

5. The battery according to claim 4, wherein a resistivity of the first positive current collector and/or the first negative current collector is $10^{-7}$ Ω/m to $10^{-6}$ Ω/m.

6. The battery according to any one of claims 1-5, wherein the heat transfer rate of the first battery cell is $\leq$ 20°C/h.

7. The battery according to claim 6, wherein the first battery cell comprises a first positive current collector and a first negative current collector, and the second battery cell comprises a second positive current collector and a second negative current collector, satisfying at least one of following conditions (d1) and (d2):

(d1) a thermal conductivity of the first positive current collector is less than a thermal conductivity of the second positive current collector; and
(d2) a thermal conductivity of the first negative current collector is less than a thermal conductivity of the second negative current collector.

8. The battery according to claim 7, wherein at least one of following conditions (e1) and (e2) is satisfied:

(e1) the thermal conductivity of the first positive current collector and/or the first negative current collector is 5 W/(m•°C) to 50 W/(m•°C); and
(e2) the thermal conductivity of the first positive current collector and/or the first negative current collector is 10 W/(m•°C) to 30 W/(m•°C).

9. The battery according to any one of claims 4, 5, 7 and 8, wherein at least one of following conditions (f1) to (f3) is satisfied:

(f1) the first positive current collector and/or the first negative current collector are repectively made of one selected from the group consisting of iron, constantan, nickel-based alloy, and iron-based alloy;
(f2) the first positive current collector and/or the first negative current collector are made of stainless steel; and
(f3) the first positive current collector and/or the first negative current collector are repectively made of one selected from the group consisting of duplex stainless steel and austenitic stainless steel.

10. The battery according to any one of claims 1-9, wherein at least one of following conditions (g1) to (g3) is satisfied:

(g1) a capacity of the first battery cell is greater than a capacity of the second battery cell;
(g2) a ratio of the capacity of the first battery cell to the capacity of the second battery cell is 1.03 to 1.2; and
(g3) the ratio of the capacity of the first battery cell to the capacity of the second battery cell is 1.05 to 1.1.

11. The battery according to any one of claims 1-10, wherein the at least one first battery cell and the at least one second battery cell are alternately distributed in sequence.

12. The battery according to claim 11, wherein first battery cells are distributed at two sides of any one of the at least one second battery cell.

13. The battery according to any one of claims 1-10, wherein the battery comprises a central region and an edge region surrounding the central region, the at least one second battery cell is distributed in the central region, and the at least one first battery cell is distributed in the edge region.

14. The battery according to claim 13, wherein a plurality of second battery cells are distributed side by side in the central region in a first direction, the first direction being parallel to a thickness direction of the second battery cells; in portions of the edge region which are located on two sides of the central region in the first direction, the at least one first battery cell is parallel to the second battery cells; and in portions of the edge region which are located on two sides of the central region in a second direction, and the at least one first battery cell is perpendicular to the second battery cells, the second direction being perpendicular to the thickness direction of the second battery cells.

15. The battery according to any one of claims 1-14, wherein the at least one first battery cell and the at least one second battery cell are connected in series in a first circuit.

16. The battery according to any one of claims 1-14, wherein the at least one first battery cell is connected in series in a second circuit, the at least one second battery cell is connected in series in a third circuit, and the second circuit and the third circuit are provided to have a first state in which the second circuit operates independently, and a second state in which the second circuit and the third circuit operate in series.

17. An electrical device, comprising the battery according to any one of claims 1-16.

1000

FIG. 1

100

FIG. 2

21 — 22

21 — 22

21

FIG. 3

21 — 22

21 — 22

FIG. 4

21   22   22

21 — 21

21   22

A

B

FIG. 5

FIG. 6

FIG. 7

FIG. 8

FIG. 9

## INTERNATIONAL SEARCH REPORT

| | International application No. |
|---|---|
| | **PCT/CN2022/125957** |

**A.    CLASSIFICATION OF SUBJECT MATTER**

H01M 10/615(2014.01)i;  H01M 10/617(2014.01)i

According to International Patent Classification (IPC) or to both national classification and IPC

**B.    FIELDS SEARCHED**

Minimum documentation searched (classification system followed by classification symbols)

H01M 10/-

Documentation searched other than minimum documentation to the extent that such documents are included in the fields searched

Electronic data base consulted during the international search (name of data base and, where practicable, search terms used)

CNTXT, ENTXTC, ENTXT, DWPI, CNKI, IEEE: 电池, 内阻, 电阻, 大于, 小于, 高于, 低于, 传热, 导热, 低温, 保温, battery, internal resistance, resistor, greater than, less than, above, below, heat transfer, heat conduct+, low temperature, heat preservation

**C.    DOCUMENTS CONSIDERED TO BE RELEVANT**

| Category* | Citation of document, with indication, where appropriate, of the relevant passages | Relevant to claim No. |
|---|---|---|
| Y | CN 109216752 A (QINGDAO HENGJINYUAN ELECTRONIC TECHNOLOGY CO., LTD.) 15 January 2019 (2019-01-15) description, paragraphs 2-91 | 1-17 |
| Y | CN 110581251 A (CHANGZHOU INSTITUTE OF TECHNOLOGY) 17 December 2019 (2019-12-17) description, paragraphs 16-23, and figures 1-3 | 1-17 |
| A | CN 205810904 U (CH-AUTO TECHNOLOGY CO., LTD.) 14 December 2016 (2016-12-14) entire document | 1-17 |
| A | CN 207677017 U (王敏 等 (WANG MIN et al.)) 31 July 2018 (2018-07-31) entire document | 1-17 |
| A | US 2016301038 A1 (AMBRI INC.) 13 October 2016 (2016-10-13) entire document | 1-17 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 December 2022** | **12 January 2023** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/125957**

| Patent document cited in search report | | | Publication date (day/month/year) | Patent family member(s) | | | Publication date (day/month/year) |
|---|---|---|---|---|---|---|---|
| CN | 109216752 | A | 15 January 2019 | CN | 109216752 | B | 29 December 2020 |
| CN | 110581251 | A | 17 December 2019 | None | | | |
| CN | 205810904 | U | 14 December 2016 | None | | | |
| CN | 207677017 | U | 31 July 2018 | CN | 109841893 | A | 04 June 2019 |
| US | 2016301038 | A1 | 13 October 2016 | WO | 2015042295 | A1 | 26 March 2015 |

Form PCT/ISA/210 (patent family annex) (January 2015)